# EUROPEAN PATENT APPLICATION

(11) **EP 3 859 942 A1**
(43) Date of publication of application: **04.08.2021**
(21) Application number: 20155098.5
(22) Date of filing: 03.02.2020
(51) Int. Cl.: H02K 1/20, H02K 1/32

(54) **ELECTRICAL MACHINE WITH COOLING CAPABILITY**

(71) Applicant: ABB Schweiz AG, 5400 Baden (CH)
(72) Inventor: CHEN, Wenliang, 722 33 Västerås (SE); RONNBERG, Kristian, 723 40 Västerås (SE); RODRIGUEZ, Pedro, 722 25 Västerås (SE); ISLAM, Jahirul, 724 71 Västerås (SE)
(74) Representative: Kransell & Wennborg KB

(57) **Abstract**

An electrical machine (1) comprising: a stator, and a rotor configured to electromagnetically interact with the stator, wherein at least one of the stator and the rotor is provided with a cooling duct (7) and a cooling fin (7a) arranged inside the cooling duct (7).

## Description

### TECHNICAL FIELD

The present disclosure generally relates to electrical machines.

### BACKGROUND

The insulation class and temperature class of the machine windings limits further increase of the electrical machine power output. The phase current as well as winding resistive losses would inevitably increase if the output torque would be increased above the limit of the electrical machine as defined by the insulation class and temperature class. This would result in that the temperature in the electrical machine would increase. Increased temperature leads to insulation failure causing a short circuit fault.

### SUMMARY

By cooling the electrical machine, it can operate at the same temperature as the defined temperature class or even lower even if the torque has been increased. Therefore, the cooling capability of electrical machine is key to safe operation.

The output power of an electrical machine has always been limited by the operating temperature. With improved cooling capability, more power can be extracted from the same machine topology and same amount of material.

For electrical machines using forced convection along the axial direction cooling ducts can be used to facilitate coolant flow.

In view of the above, an object of the present disclosure is to provide an electrical machine which solves, or at least mitigates, the problems of the prior art.

There is hence provided an electrical machine comprising: a stator, and a rotor configured to electromagnetically interact with the stator, wherein at least one of the stator and the rotor is provided with a cooling duct and a cooling fin arranged inside the cooling duct.

By means of the cooling fin, the cooling of the electrical machine may be improved because the cooling surface in the cooling duct is increased. Further, the saturation level of the stator/rotor is not increased and may even be decreased depending on the thickness of the cooling fin.

Using 2D Finite Element Method (FEM) simulations with a model including a 4 mm thick cooling fin in a cylindrical cooling duct with a diameter of 38 mm in the rotor body it has been found that the temperature in the rotor body is reduced by about 10° C. Further, the rotor body losses were reduced by 3%. This was confirmed by a 3D heat transfer simulation.

By lowering the temperature in the stator or rotor, the electrical machine can be operated at a lower temperature than rated, guaranteeing a longer lifetime or it can be operated with higher power than would be possible without the improved cooling, or the rotor or stator material may be replaced with a lower-cost material.

The cooling duct is configured to receive a forced cooling fluid flow to cool the electrical machine. For example, the electrical machine may comprise a cooling unit configured to generate forced convection of a cooling fluid such as air in the cooling duct. The cooling unit may for example be a fan.

The electrical machine may be a motor or a generator. The electrical machine may be a synchronous machine or an asynchronous machine.

The cooling fin may be a cooling plate.

According to one embodiment the stator comprises first laminated sheets stacked one after the other in an axial direction of the stator forming a stator core and the rotor comprises second laminated sheets stacked one after the other in the axial direction of the rotor forming a rotor body, wherein the cooling duct is arranged in the stator core or in the rotor body.

The first laminated sheets may for example comprise steel such as silicon steel. The second laminated sheets may for example comprise steel such as silicon steel.

According to one embodiment the cooling duct is arranged in the stator core and the cooling fin is formed by the first laminated sheets or the cooling duct is arranged in the rotor body and the cooling fin is formed by the second laminated sheets.

By forming the cooling fin from the first laminated sheets or the second laminated sheets the cooling fin obtains the same characteristics as the stator core/rotor body with respect to reduced eddy current generation. Thus, the losses and thus heat generated by eddy currents in the cooling fin is reduced.

By giving the cooling fin an appropriate thickness, an optimum can be obtained with regards to cooling capability, mechanical strength, and saturation. The thicker the cooling fin is the simpler it is to manufacture, but thickness reduces the cooling capability. For example, the cooling fin may have a thickness corresponding to the thickness of four or more of the first laminated sheets or second laminated sheets, such as six, eight, or more of the first laminated sheets or second laminated sheets.

According to one embodiment the cooling fin has planar cooling surfaces in the cooling duct. The cooling fin could for example be defined by the planar structure of the first laminated sheets or second laminated sheets. The cooling fin could hence have an extension parallel with the first laminated sheets if arranged in the stator core or with the second laminated sheets if arranged in the rotor body.

According to one embodiment the cooling fin has at least one undulating cooling surface. In this way, the cooling surface is increased whereby the cooling can be made more efficient. In a cross-section of the cooling duct, the cooling fin may be undulating as it extends from one inner surface towards an opposing inner surface of the cooling duct.

With the term "cross-section" is herein meant a cross-sectional plane that is perpendicular to the rotational axis of the rotor.

According to one embodiment opposing cooling surfaces of the cooling fin are undulating.

According to one example the general extension of the cooling fin may be in the radial direction of the rotor body or the stator core. Thus, for example if the cooling fin has planar cooling surfaces, the cooling fin may, in cross-section of the cooling duct, extend radially along its entire extension. In case the cooling fin has one or more undulating cooling surface, the average of the undulating pattern may be along a radial line of the rotor body or stator core.

According to one embodiment in a cross-section of the electrical machine the cooling fin extends entirely between opposing inner surfaces of the cooling duct. The cooling fin may thus be integral with opposing inner surfaces of the cooling duct.

The cooling fin may extend across the cooling duct from, in cross-section, a hotter side of the cooling duct to a cooler side of the cooling duct. In this way, a heat bridge is formed between the lower temperature side of the cooling duct and the hotter temperature side.

According to one example, one or more than one cooling surface of the cooling fin may be irregular. For example, the one or more than one cooling surface may be provided with a plurality of protrusions. The surface area of the cooling fin may thereby be increased.

According to one embodiment in a cross-section of the electrical machine the cooling fin extends from an inner surface of the cooling duct only partly towards an opposing inner surface of the cooling duct, wherein a gap is formed between the cooling fin and the opposing inner surface. The cooling fin hence has a base which extends from the inner surface of the cooling duct and an open end which is arranged at a distance from the opposing inner surface of the cooling duct. In this way, the cooling fin is provided with a thermal expansion tolerance.

According to one embodiment in cross-section the cooling duct has a hotter side and a cooler side, wherein the cooling fin extends from the hotter side towards the cooler side, the opposing inner surface forming part of the cooler side. It is beneficial from a cooling perspective to have the cooling fin in direct contact with the hotter side, while providing thermal expansion tolerance towards the cooler side.

In case the cooling duct is arranged in the rotor body, the cooling duct may be arranged radially distanced from the central axis of the rotor. The region of the rotor body around the cooling duct which is closer to the central axis is the cooler side of the rotor body, i.e. the side with a cooler temperature, and the region of the rotor body around the cooling duct which is closer to the outer circumference of the rotor body is the hotter side, i.e. the side with a hotter temperature. Similarly, for a stator core, the region around the cooling duct closer to the air gap towards the rotor is the hotter side of the stator core and the region around the cooling duct facing away from the air gap is the cooler side of the stator core.

According to one embodiment the rotor is configured to be rotated relative to the stator about a rotational axis and the cooling duct extends parallel with the rotational axis.

According to one embodiment the cooling fin extends along a majority of the length of the cooling duct.

According to one embodiment the rotor is arranged concentrically with the stator.

According to one embodiment the electrical machine comprises a plurality of cooling ducts arranged in the rotor body and/or the stator core, each cooling duct comprising a respective cooling fin arranged inside the cooling duct. The cooling fin of each cooling duct may be according to any of the examples of the cooling fin disclosed herein.

The selection of the number of cooling ducts can be made to maximise the contact surface for cooling while maintaining the electromagnetic performance of the electrical machine.

Generally, all terms used in the claims are to be interpreted according to their ordinary meaning in the technical field, unless explicitly defined otherwise herein. All references to "a/an/the element, apparatus, component, means, etc." are to be interpreted openly as referring to at least one instance of the "element, apparatus, component, means, etc.", unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows a cross-sectional view of an example of an electrical machine;
Fig. 2 shows a portion of a cross-section of a rotor of the electrical machine in Fig. 1;
Fig. 3 shows a portion of a cross-section of the stator of the electrical machine in Fig. 1;
Fig. 4a shows a close-up view of an example of a cooling duct;
Fig. 4b shows a close-up view of another example of a cooling duct; and
Fig. 4c shows a close-up view of another example of a cooling duct.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

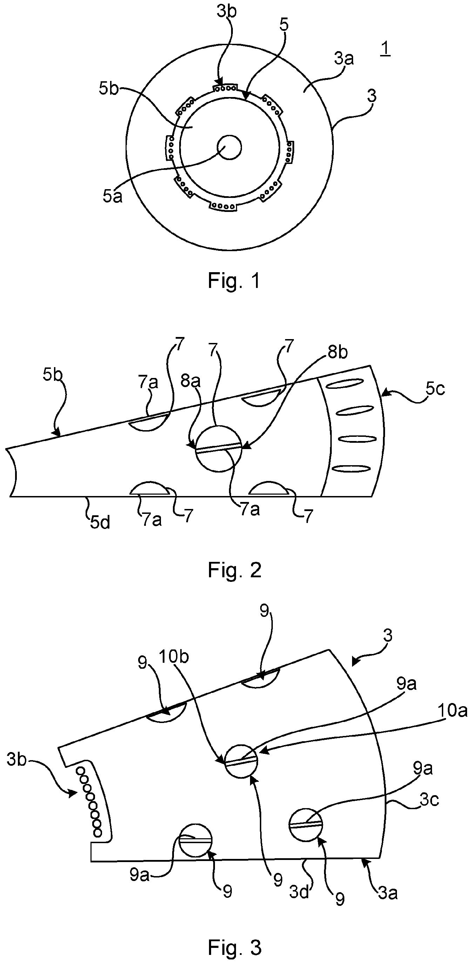

Fig. 1 schematically shows a cross-sectional view of an example of an electrical machine 1. The electrical machine 1 may be a motor or a generator. The electrical machine 1 may be a synchronous machine or an asynchronous machine.

The electrical machine 1 comprises a stator 3 and a rotor 5. The stator 3 and the rotor 5 are configured to electromagnetically interact with each other. The electrical machine 1 is a rotary electrical machine. The rotor 5 is configured to rotate relative to the stator 3. The rotor 5 and the stator 3 are arranged concentrically. In the present example the rotor 5 is arranged inside the stator 3. Alternatively, the stator 3 could be arranged inside the rotor 3.

The stator 3 comprises a stator core 3a. The stator core 3a is formed by or made of a plurality of first laminated sheets. The first laminated sheets are stacked one after the other in the axial direction of the stator 3. The first laminated sheets may for example be silicon steel sheets. The stator 3 also comprises a plurality of stator windings 3b which are wound in the stator core 3a.

The rotor 3 comprises a rotor shaft 5a. The rotor shaft 5a is arranged centrally in the rotor 5. The rotor 3 comprises a rotor body 5b arranged radially around the rotor shaft 5a. The rotor body 5b is formed by or made of a plurality of second laminated sheets. The second laminated sheets are stacked one after the other in the axial direction of the rotor 5. The second laminated sheets may for example be silicon steel sheets.

The rotor 3 may be provided with rotor windings in case the rotor 3 is an electromagnet.

The electrical machine 1 comprises a plurality of cooling ducts (not shown in Fig. 1). The cooling ducts extend axially along the electrical machine 1. The cooling ducts may be arranged in one of the stator core 3a and the rotor body 5b, or in both the stator core 3a and the rotor body 5b. The cooling ducts are formed by individual cooling duct fractions in the stacked first laminated sheets and/or the stacked second laminated sheets.

The electrical machine 1 may also comprise a cooling unit (not shown) configured to cause a coolant to flow through the cooling ducts. The cooling unit may for example comprise an air blowing unit such as a fan, arranged to continuously blow air into the cooling ducts to thereby provide cooling of the electrical machine 1.

Fig. 2 shows a close-up view of a portion of an example of the rotor body 5b in cross-section. Thus, a single second laminated sheet 5d of the stacked second laminated sheets is shown. Reference numeral 5c shows the radially outer boundary of the rotor 5.

In the example shown in Fig. 2, the rotor body 5b is provided with a plurality of cooling ducts 7, of which only one can be seen in its entirety. The cooling ducts 7 are distributed in the circumferential direction of the rotor 5. Each second laminated sheet 5d may hence be provided with a plurality of cooling duct fractions 7 (the same reference number 7 is used both for cooling ducts and cooling duct fractions). The cooling ducts 7 may be uniformly distributed in the rotor body 5b. The cooling ducts 7 all extend parallel with the axial extension of the rotor shaft 5a. The cooling ducts 7 are axial cooling ducts.

Each cooling duct 7 is provided with a respective cooling fin 7a. The cooling fins 7a are arranged inside a respective cooling duct 7. In each cooling duct 7 a cooling fin 7a extends from an inner surface of the cooling duct 7. The cooling fins 7a are formed by the second laminated sheets 5d, whereby a plurality of second laminated sheets 5d is provided with a plurality of cooling fin fractions 7a (the same reference number 7a is used both for cooling fins and cooling fin fractions). Preferably, each cooling fin 7a, in a plane defined by the planar surface of the corresponding second laminated sheet 5d has a thickness corresponding to the thickness of a plurality of second laminated sheets 5d. When the rotor body 5b is manufactured the rotor body 5b is formed by the stacked second laminated sheets 5d, wherein the cooling duct fractions 7 are formed by punching through each second laminated sheet 5d. The punching is done such that the cooling fin fractions 7a are left in the cooling duct fractions 7. For example, two semi-circular openings may be punched to thereby form a cooling fin fraction 7a in a cooling duct fraction 7 formed by the two semi-circular openings. The cooling ducts 7 may hence in this example, when the cooling fin 7a divides the circular duct into two separated semi-circular channels, be formed by the two semi-circular channels. Alternatively, the cooling ducts 7 may have another cross-sectional shape than being circular. They may for example be polygonal such as rectangular, hexagonal, or elliptical.

In operation, the rotor body 5b has a hotter side and a cooler side with respect to each cooling duct 7. The hotter side is hotter than the cooler side. For each cooling duct the cooler side is closer to the rotor shaft 5a than the hotter side, which is closer to the outer boundary 5c. Thus, for example for the cooling duct 7 shown in its entirety in Fig. 2, the cooler side 8a is closer to the rotor shaft 5a than the hotter side 8b.

The cooling ducts 7 may extend along the entire rotor body 5b, through all the second laminated sheets 5d. The cooling fins 7a may extend along a majority of the axial length of the cooling ducts 7. For example, the cooling fins 7a may extend along at least three quarters of the length of the corresponding cooling duct 7, or each second laminated sheet 5d may be provided with cooling fin fractions 7a.

Fig. 3 shows a close-up view of a portion of an example of the stator 3 in cross-section. Thus, a single first laminated sheet 3d of the stacked first laminated sheets is shown. Reference numeral 3c shows the radially outer boundary of the stator 3.

In the example shown in Fig. 3, the stator core 3a is provided with a plurality of cooling ducts 9. Each first laminated sheet 3d may be provided with a plurality of cooling duct fractions 9 (the same reference number 9 is used both for cooling ducts and cooling duct fractions). The cooling ducts 9 are distributed in the circumferential direction of the stator core 3a. The cooling ducts 9 may be uniformly distributed in the stator core 3a. The cooling ducts 9 all extend parallel with the axial extension of the stator core 3a. The cooling ducts 9 are axial cooling ducts.

Each cooling duct 9 is provided with a respective cooling fin 9a. The cooling fins 9a are arranged inside respective cooling ducts 9. In each cooling duct 9 a cooling fin 9a extends from an inner surface of the cooling duct 9. The cooling fins 9a are formed by the first laminated sheets 3d. In the present example, in each first laminated sheet 3d the cooling fin fractions 9a (the same reference number 9a is used both for cooling fins and cooling fin fractions) are formed by the first laminated sheet 3d in question. Preferably, each cooling fin 9a has a thickness in a plane defined by the planar surfaces of the first laminated sheets 3d corresponding to the thickness of a plurality of first laminated sheets 3d.

The cooling duct fractions 9 and cooling fin fractions 9a may be made by punching as described above in conjunction with the cooling duct fractions 7 and cooling fin fractions 7a of the rotor body 3b.

Each cooling duct 9 has a hotter side and a cooler side. For each cooling duct 9 the hotter side is closer to the air gap towards the rotor 5 and the cooler side is closer to the outer boundary 3c of the stator 3. As an example, the cooler side 10a and the hotter side 10b of the cooling duct 9 centred between the four outer cooling ducts 9 are indicated in Fig. 3.

The cooling ducts 9 may extend along the entire stator core 3a. The cooling fins 9a may extend along a majority of the axial length of the cooling ducts 9. For example, the cooling fins 9a may extend along at least three quarters of the length of the corresponding cooling duct 9 or each first laminated sheet 3d may be provided with cooling fin fractions 9a.

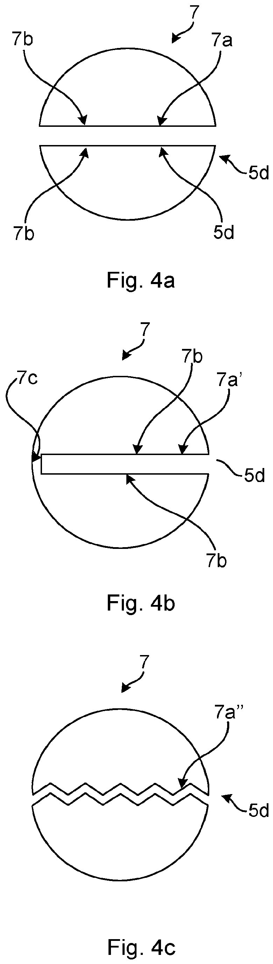

Fig. 4a shows a close-up view of an example of a cooling duct 7 provided with a cooling fin 7a formed by second laminated sheets 5d. The configuration could be the same for cooling ducts 9 and cooling fins 9a, but for reasons of simplicity the example herein will be illustrated in the context of a cooling duct 7 of the rotor 5.

In the example shown in Fig. 4a, in cross-section of the cooling duct 7, the cooling fin 7a extends continually the entire way from one inner surface to the opposing inner surface of the cooling duct 7. Thus, for each second laminated sheet 5d forming the cooling fin 7a, the respective cooling fin fraction 7a extends continuously through the entire cooling duct fraction 7 in a cross-section thereof. The cooling fin 7a hence fully divides the cooling duct 7 into two separated channels.

The cooling fin 7a has cooling surfaces 7b which are the outer surfaces of the cooling fin 7a. The cooling surfaces 7b are in direct thermal contact with the two separated channels forming the cooling duct 7. The cooling surfaces 7b hence form delimiting surfaces of the cooling duct 7. Both cooling surfaces 7b are in the present example planar. The cooling surfaces 7b may be smooth. Alternatively, one of the cooling surfaces 7b may be planar and the other may be undulating or provided with protrusions to increase the surface area in direct thermal contact with the cooling duct 7.

Fig. 4b shows a close-up view of another example of a cooling duct 7 provided with the cooling fin 7a'. The cooling fin 7a' is similar to the cooling fin 7a shown in Fig. 4a. The cooling fin 7a' in Fig. 4b does however not extend fully between the opposing inner surfaces of the cooling duct 7. The cooling fin 7a' in Fig. 4b extends from one inner surface towards an opposing inner surface 7c of the cooling duct 7 but not the entire way to touch or be integral with the opposing inner surface 7c. There is hence a gap between an end portion of the cooling fin 7a' and the opposing inner surface 7c. Preferably, the cooling fin 7a' extends from the hotter side of the cooling duct 7 towards the cooler side with the opposing inner surface 7c forming part of the cooler side. The cooling surface or cooling surfaces of the cooling fin 7a' may also in this example be planar or at least one of the cooling surfaces may be planar.

Fig. 4c shows another example of a cooling duct 7 with a cooling fin 7a". The cooling fin 7a" extends fully between the opposing inner surfaces of the cooling duct 7 like the cooling fin 7a in the example in Fig. 4a. However, the cooling fin 7a" has undulating cooling surfaces in a direction from one inner surface to the opposing inner surface of the cooling duct 7. The cooling surfaces may hence be undulating in the radial direction. The surface area of the cooling surfaces is thereby increased making cooling more efficient. This configuration may also be punched out from the stacked first laminated sheets 5d.

According to one variation of the example shown in Fig. 4c, the cooling fin could be undulating but without extending all the way between opposing inner surfaces of the cooling duct, similarly as described in the example in Fig. 4b. The cooling fin could hence be undulating and provided with a gap towards the opposing inner surface of the cooling duct with respect to the inner surface from which the cooling fin extends into the cooling duct.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. An electrical machine (1) comprising:
a stator (3), and
a rotor (5) configured to electromagnetically interact with the stator (3),
wherein at least one of the stator (3) and the rotor (5) is provided with a cooling duct (7, 9) and a cooling fin (7a, 9a; 7a'; 7a") arranged inside the cooling duct (7, 9).

2. The electrical machine (1) as claimed in claim 1, wherein the stator (3) comprises first laminated sheets (3d) stacked one after the other in an axial direction of the stator (3) forming a stator core (3a) and the rotor (5) comprises second laminated sheets (5d) stacked one after the other in the axial direction of the rotor (3) forming a rotor body (5b), wherein the cooling duct (7, 9) is arranged in the stator core (3a) or in the rotor body (5b).

3. The electrical machine (1) as claimed in claim 2, wherein the cooling duct (9) is arranged in the stator core (3a) and the cooling fin (9a) is formed by the first laminated sheets (3d) or the cooling duct (7) is arranged in the rotor body (3b) and the cooling fin (7a; 7a'; 7a") is formed by the second laminated sheets (5d).

4. The electrical machine (1) as claimed in any of the preceding claims, wherein the cooling fin (7, 9; 7a') has planar cooling surfaces (7b) in the cooling duct (7).

5. The electrical machine (1) as claimed in any of claims 1-3, wherein the cooling fin (7a") has at least one undulating cooling surface.

6. The electrical machine (1) as claimed in any of claims 1-3 or 5, wherein opposing cooling surfaces of the cooling fin (7a") are undulating.

7. The electrical machine (1) as claimed in any of the preceding claims, wherein in a cross-section of the electrical machine (1) the cooling fin extends entirely between opposing inner surfaces of the cooling duct (7, 9).

8. The electrical machine (1) as claimed in any of claims 1-6, wherein in a cross-section of the electrical machine (1) the cooling fin (7a') extends from an inner surface of the cooling duct only partly towards an opposing inner surface (7c) of the cooling duct (7), wherein a gap is formed between the cooling fin (7a') and the opposing inner surface (7c).

9. The electrical machine (1) as claimed in claim 8, wherein in cross-section the cooling duct (7) has a hotter side (8b) and a cooler side (8a), wherein the cooling fin (7a') extends from the hotter side (8b) towards the cooler side (8a), the opposing inner surface (7c) forming part of the cooler side (8a).

10. The electrical machine (1) as claimed in any of the preceding claims, wherein the rotor (5) is configured to be rotated relative to the stator (3) about a rotational axis and the cooling duct (7, 9) extends parallel with the rotational axis.

11. The electrical machine (1) as claimed in any of the preceding claims, wherein the cooling fin (7, 9; 7a'; 7a") extends along a majority of the length of the cooling duct (7, 9).

12. The electrical machine (1) as claimed in any of the preceding claims, wherein the rotor (5) is arranged concentrically with the stator (3).
